# EUROPEAN PATENT SPECIFICATION

(11) **EP 2 343 987 B1**
(45) Date of publication and mention of the grant of the patent: **05.12.2012**
(21) Application number: 09751850.0
(22) Date of filing: 27.10.2009
(51) Int. Cl.: A23F 3/40, A23F 3/14

(54) **TEA COMPOSITION**
TEEZUSAMMENSETZUNG
COMPOSITION DE THÉ

(30) Priority: 11.11.2008 IN MU23862008
(43) Date of publication of application: 20.07.2011
(73) Proprietor: Unilever NV, 3013 AL Rotterdam (NL); Unilever PLC, London EC4Y 0DY (GB)
(72) Inventor: KHANIJOW, Sahil, Bangalore 560 066 (IN); MULLICK, Ashim, Bangalore 560 066 (IN); SINKAR, Vilas, P, Bangalore 560 066 (IN); SAPLAY, Kishore, M, Bangalore 560 066 (IN)
(74) Representative: Clarke, Christopher John
(86) International application number: PCT/EP2009/064149
(87) International publication number: WO 2010/054932

(56) References cited:
- JP-A- 3 266 938
- US-A- 4 051 264
- DATABASE WPI Week 200676 Thomson Scientific, London, GB; AN 2006-741448 XP002573903 & KR 2006 044 130 A (KIM S J) 16 May 2006 (2006-05-16)

## Description

### Technical Field of the Invention

The invention relates to a tea composition. The invention more particularly relates to a black tea composition that is high in beneficial ingredients while having none of the off-taste and flavour that is usually associated with incorporation of such ingredients.

### Background to the Invention

Tea is one of the most popular beverage which is drunk in most parts of the world. Tea is the second largest consumed beverage after water. Tea is consumed in many different formats. Popular formats include black tea, green tea, oolong tea, hot-instant tea, cold-instant tea, ready-to-drink tea, ice-tea etc. Generally, to prepare black tea, fresh green leaves of the plant *Camellia sinensis* are withered (a process where plucked tea leaves are allowed to lose moisture and bring about chemical / biochemical changes especially in aroma), macerated, fermented (in which process enzymes in the tea leaf use atmospheric oxygen to oxidise various substrates to produce coloured products) and then dried at higher temperatures (to stop the enzyme activities). Green tea is produced by not exposing the tea leaves to the fermentation process. Partial fermentation is used to produce intermediate-type teas known as "oolong" tea.

Green, black and oolong tea are products which are brewed in hot water to produce tea infusions wherefrom the tea leaf insolubles are filtered before the infusions are consumed. Different consumers use additives e.g sugar, milk, lemon with the infusions depending on individual preferences.

Consumers have come to expect more and more beneficial ingredients from their tea beverage. Tea manufacturers have tried to meet these expectations by incorporating one or more of various beneficial ingredients like polyphenols, catechins, theaflavins, theanine, etc. One way that they have tried to do that is by increasing the amount of these beneficial ingredients by changing the biochemical pathways leading to formation of these ingredients prior to plucking of tea leaves from the bush or by suitable interventions during one or more of the tea manufacturing steps alluded to in the preceding paragraphs. Another way that these ingredients have been included in tea is to buy these ingredients and incorporate them in the finished black tea by simple dry mixing of tea with one or more of these beneficial ingredients.

Most of the beneficial ingredients mentioned above are naturally present in tea, albeit to a small amount. It has been observed that many of these ingredients, when present in tea, in amounts higher than is naturally present in tea, tend to give a taste or flavour which is different from that which tea drinkers are normally used to.

Two of the important characteristics of tea that consumers seek for and expect in their tea are the aroma and the flavour of the tea beverage. Aroma is what is sensed by the nose and generally depends on the volatile components of tea. Tea-tasters evaluate aroma in terms of three descriptors viz. tea aroma, green aroma and fresh aroma. The flavour is what is sensed by a combination of taste as sensed by the tongue and the smell as sensed by the nose retro-nasally. Thus both volatile components as well as non-volatile components are responsible for flavour.

One of the beneficial ingredients that the present inventors have included in black tea in enhanced levels is gallic acid. The natural levels of gallic acid in tea is usually less than 0.5%. Gallic acid is known to have antioxidant, anti-microbial and anti-inflammatory properties. US 2007/0071841A1 reports that grape extracts enriched in gallic acid are useful for treating / preventing metabolic syndrome especially lowering blood pressure. Theaflavins are another class of compounds that are naturally present in black tea at amounts of up to 1-2%. Enhancing the level of theaflavins in tea has been suggested in J.B. Cloughley and R.T. Ellis, J. Sci. Food. Agric. 31, 924-934 (1980); and in US6113965 A (Lipton). Theaflavins are known to have antioxidant, antimicrobial, anti-inflammatory properties see e.g. M.-T. Huang, Y. Liu, D. Ramji, C.-Y. Lo, G. Ghai, S. Dushenkov and C.-T. Ho, Mol. Nutr. Food Res. 50, 115-122 (2006); D.A. Evans, J.B. Hirsch, S. Dushenkov, J. Sci. Food Agric. 86, 2503-2509 (2006). Theaflavins have been reported as effective against various diseases including cancer, cardiovascular and cerebrovascular diseases, diabetes, and hypercholesterolemia.

One of the ways in which tea is enhanced in levels of both gallic acid and theaflavins is by treatment of tea with tannase, see for example US4051264 (issued to Thomas J Lipton Inc. in 1977). This patent claims a process for preparing black tea leaf from green tea leaf which comprises the steps of comminuting freshly harvested green tea leaf, treating the comminuted fresh green tea leaf with tannase at a temperature and for a time sufficient to impart a substantial cold water extractability to the manufactured tea leaf, fermenting the treated green tea leaf, and firing the fermented tea leaf to reduce the moisture content of the tea leaf to below about 5% to produce a cold water extractable fired black tea leaf. In this patent, the following is described *"While the exact mechanism by which the invention works is not known, it is believed that the processes described above cause the tannase enzymes to enter the tissues of the green tea thereby causing the hydrolysis of the ester bonds which link gallic acid and tea catechins to provide a higher yield of cold water extractable tea solids.* " Thus, treatment of tea during black tea manufacture with tannase enzyme causes increase in the amount of gallic acid in the black tea, thus produced.

It has been observed that tea which is high in ingredients like gallic acid, tends to have a sour taste in the beverage prepared from it. The problem of sourness of tea beverage which is high in gallic acid has been reported e.g. in JP2007/195458. The abstract of this patent publication describes the problem of tannase treated tea having high gallic acid which has off taste (bitter, astringent, harsh, sour) and this problem is solved by passing the extract through negative ion exchange resin.

The present inventors have also been working on solving this problem of reducing or nullifying the sourness of tea having high levels of gallic acid. The solution suggested by JP2007/195458 is applicable to solving the problem only for hot or cold soluble or ready-to-drink tea formats where black tea has been at least once infused in to water. It cannot be used for solving the problem in regular black leaf tea products. Further the solution suggested is cumbersome, expensive and difficult to scale up.

The present inventors have solved this problem by incorporating a few selected flavour compositions in selective amounts in black tea. Prior art on use of gallic acid to solve the problem of turbidity has been reported. JP03-266938 claims a method for preparing a turbidity-free tea product, wherein tea is extracted from tea leaves by using hot water containing a water-soluble substance having ≤700 molecular weight represented by a general formula which includes classes of compounds like acids, metal salts and esters. Examples of acids given are gallic acid, benzoic acid, etc., examples of metal salts given are sodium benzoate, potassium benzoate, etc while esters are exemplified by catechin gallate, gallocatechin gallate, etc. This JP publication thereafter goes on to state that "next, the extracted solution is filtered, other ingredients comprising sweetener, lemon juice, etc., are added thereto and cooled to obtain the tea product. "

Thus although tea extract has been treated with *inter alia* gallic acid for reducing turbidity in the extracted tea beverage and thereafter sweetener or lemon juice has been added, the prior art does not teach the solution to a taste (sourness) problem that occurs on incorporation of specified amounts of gallic acid by incorporation of selective amounts of selected flavour compositions in black tea. The present inventors have found that only use of these claimed selective flavour ingredients are able to solve the taste problem while other well known flavours normally used in tea do not solve the problem.

It is thus an object of the present invention to provide for a tea composition comprising high levels of gallic acid that has taste which is acceptable to the regular tea drinker.

It is another object of the present invention to provide for a tea composition that is prepared by tannase treatment method thus having high levels of beneficial ingredients like gallic acid and theaflavins while not compromising on the taste that normal consumers have come to expect from their regular black tea beverage.

It is yet another object of the present invention to provide for a tea composition having high levels of beneficial ingredients which on the one hand has acceptable taste and flavour of regular black tea while on the other hand is inexpensive and can be prepared by simple and easy-to-scale-up manufacturing process.

### Summary of the Invention

According to one aspect of the present invention there is provided a black tea composition comprising 1-5% gallic acid and 0.01 to 6% flavour composition comprising a lemon, peach or ginger flavour.

### Detailed Description of the Invention

The invention relates to a black tea composition comprising 1-5% gallic acid and 0.01 to 6% flavour composition comprising lemon, peach or ginger flavour.

It is preferred that the flavour composition comprises 0.1 to 25%, more preferably 0.5 to 15% of flavour compounds. The balance of the flavour composition may be binders, stabilisers and other compounds that are incorporated in flavour compositions to provide the flavour compositions with bulk, stability, free flow property and other convenience of handling and use by the consumers.

Gallic acid has the structure:

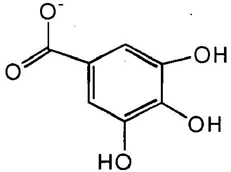

Gallic acid or 3,4,5 trihydroxybenzoic acid is normally present in about 0.2-0.5 weight%, at most about 1% by weight in black tea. Gallic acid is present in trace levels in the fresh green leaf but significant amount of galloyl esters epicatechin gallate and epigallocatechin gallate are present in green leaf. Gallic acid is generated during fermentation, most likely through the degradation of galloyl esters of catechins and theaflavins. This level may be enhanced either by incorporation of gallic acid from extraneous sources or may be enhanced by changes in the manufacturing process of black tea that intervene in the biochemical processes leading to higher amounts of gallic acid in black tea. One of the ways in which gallic acid is enhanced in black tea is by treatment of tea leaves during manufacture of black tea with tannase prior to or during the step of fermentation This enzyme degallates the galloyl esters and releases gallic acid. The usual steps prior to fermentation in manufacture of black tea include withering and maceration. After the step of fermentation, the tea is fired at high temperature usually with hot air with a temperature of 120 to 140°C to ensure drying of the tea to a moisture content less than 5 weight% and to inactive the enzymes. This intervention leads to black tea with gallic acid which may be as high as 5 weight%, but is usually in the range of 2-4% by weight of the composition. It has been observed that black tea with these high level of gallic acid gives a distinct sourness to the tea beverage prepared from such teas. This amount of sourness is not liked by consumers.

Tea leaf, when picked from the tea plant contains polyphenols known as catechins. These catechins are colourless compounds. The four major catechins in tea leaf are epicatechin (EC), epigallocatechin (EGC) epicatechin-3-gallate (ECG) and epigallocatechin-3-gallate (EGCG). Theaflavins are produced during the oxidative fermentation of leaf tea to produce black tea. The above named catechins undergo oxidative biotransformations into dimeric compounds known as theaflavins (TFs) and higher molecular weight compounds known as thearubigins (TRs). The structure of the TFs have been fairly well worked out and the four main theaflavins are known as theaflavin (TF1), theaflavin-3-monogallate (TF2), theaflavin-3'-monogallate (TF3) and theaflavin-3-3'-digallate, (TF4) and have the structures given below: 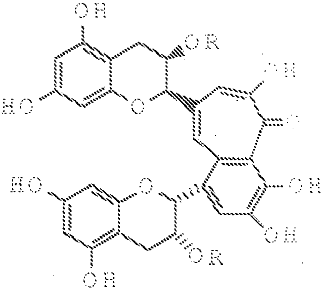 R or R' = H or G determines whether it is TF1, TF2, TF3 or TF4,

Where G is derived from gallic acid (structure shown below)

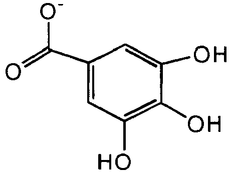

Therefore
R=R'=H: TF1
R= G; R'= H: TF2
R=H; R'=G : TF3
R=R'=G: TF4

The characteristic orange and brown colour of brewed black tea is due to the presence of the TFs and the TRs. They also give astringency and body to the brewed tea. TRs are larger in size and darker in colour than TFs. Black tea in the normal course of manufacture comprises about 0.2 to 1% theaflavins. It is more often in the range of 0.4 to 0.7% by weight of black tea.

There are many processes reported in the recent past where manufacture of tea is intervened to prepare tea with significantly higher amounts of theaflavins. Treatment of tea during it's manufacture with tannase during or prior to fermentation increases the amount of theaflavins to up to 1.5 to 4 % by weight of black tea. Teas with such high amounts of theaflavins are also preferred for use in the composition of the present invention.

It has been found by way of the present invention that the taste of tea having high gallic acid can be corrected by incorporation of selective flavour compositions in selective amounts. The selective flavours compositions are lemon, peach or ginger based. They are incorporated in amounts in the range of 0.01 to 6%. The present inventors tried incorporating a large number of other commonly used flavour compounds like cinnamon, cardamom, bergamot or orange blossom but found them to be ineffective in correcting the sourness brought about by the high levels of gallic acid in black tea. The more preferred flavour is lemon flavour. Lemon flavour is preferably incorporated in the range of 2.5 to 6% by weight of the tea composition.

The black tea composition thus prepared as per the present invention may be further processed to prepare cold instant tea, hot instant tea or ready-to-drink tea. Hot instant tea is a product which contains no water insolubles. This hot instant tea product is fully soluble in hot water and this product can be consumed as such without any filtration. The conventional process to prepare hot instant tea is described in the reference book 'Tea-Cultivation to Consumption' edited by K. C. Wilson & M. N. Clifford & published by Chapman & Hall (1992). The typical process involves taking the desired raw material (e.g. black tea), which is extracted using hot water in a multi-stage counter-current extractor. The ratio of tea: water is typically between 1: 6 and 1:12 on dry basis. The tea liquor/extract is separated from the spent tea leaf by passing it through a screw press. This extract containing about 3.5-4% tea solids, is clarified by removing coarse and fine particulates by de-leafing in a centrifuge. Subsequently, the extract is concentrated to 35-40% solids in an evaporator. This concentrate is spray dried to get the hot instant tea powder. Water soluble tea powder which is soluble in cold water is called cold instant tea. A tea beverage, which is ready to drink usually with incorporated additional flavours and sold in aseptic packaging like cans are called ready-to-drink (RTD) tea. RTD tea which is sold chilled is often called iced-tea.

The tea composition preferably comprises not more than 10%, more preferably not more than 8% moisture, most preferably not more than 5% by weight of the tea composition.

The second aspect of the invention provides for a process to prepare a tea composition comprising the step of mixing the black tea which has 1 to 5 wt% gallic acid with 0.01 to 6 wt% flavour composition comprising lemon, peach or ginger flavour.

The invention will now be demonstrated with examples. The examples are by way of illustration only and do not limit the scope of invention in any manner.

### Examples

### Examples 1 to 6: Effect of gallic acid addition to tea on the taste of the beverage

Several tea samples were prepared as shown in Table 1 where Taj Mahal™ brand of tea was procured from the Indian market. To this, various amounts of gallic acid was added. Tea beverage was prepared by taking 2 g of the tea sample and by boiling in 200 ml water for six minutes. The tea sample thus prepared was tasted by an expert flavourist and the comments on the taste of the beverage thus prepared are given in Table 1. Example - 1 was a sample of Taj Mahal™ tea to which 0.2% gallic acid is inherently present and no further amount of gallic acid was added. To the Examples 2 to 6, various amounts of gallic acid were added.

**Table 1**

| Example | Gallic acid, wt % | Comment by flavourist |
|---|---|---|
| 1 | 0.20 | Normal taste of tea beverage |
| 2 | 1.53 | Distinct sourness is perceived |
| 3 | 2.19 | Typical bitter / astringency with slight sourish taste |
| 4 | 2.86 | Typical bitter / astringency with slight sourish taste |
| 5 | 3.52 | Typical bitter / astringency with slight sourish taste |
| 6 | 4.85 | More sourish taste is perceived along with typical bitter / astringency taste |

The data in Table 1 indicates that presence of gallic above about 1% gives a distinct sour taste. This amount of sourness is not liked by consumers.

### Examples 7 to 17: Effect of inclusion of various flavours in high gallic acid teas

Several tea samples were prepared as shown in Table 2 where Taj Mahal™ brand of tea, procured from the Indian market, was dosed with various amounts of gallic acid. To these tea samples various amounts of different flavour compositions as shown in Table 2 was included. Tea beverage was prepared by taking 2 g of the tea sample and by boiling in 200 ml water for six minutes. The tea sample thus prepared was tasted by an expert flavourist and the comments, on the taste of the beverage, thus prepared, are given in Table 2.

The flavour compositions were procured from:

| | | |
|---|---|---|
| Lemon: | Lemon Durarome | from Firmenich. |
| Peach: | Peach Durarome | from Firmenich |
| Ginger: | Ginger Durarome | from Firmenich. |
| Cardamom: | Cardamom Durarome | from Firmenich |
| Bergamot: | Bergamot Evoglass | from Symrise. |

**Table 2**

| Example | Gallic acid, wt% | Flavour Composition | Flavour composition, wt% | Comment by flavourist |
|---|---|---|---|---|
| 7 | 1.53 | Lemon | 1.89 | Sourishness harmonized to give overall acceptable quality |
| 8 | 4.18 | Lemon | 3.68 | Sourishness harmonized to give overall acceptable quality |
| 9 | 5.51 | Lemon | | No amount of lemon flavour could harmonize the sourness of gallic acid at this level |
| 10 | 1.53 | Ginger | 0.74 | Sourishness harmonized to give overall acceptable quality |
| 11 | 4.85 | Ginger | 1.47 | Sourishness harmonized to give overall acceptable quality |
| 12 | 5.51 | Ginger | | Sourness still sticks out even when very high amount of ginger flavour is added. Flavour could not be harmonised. |
| 13 | 1.53 | Peach | 0.053 | Sourishness harmonized to give overall acceptable quality |
| 14 | 3.52 | Peach | 0.084 | Sourishness harmonized to give overall acceptable quality |
| 15 | 5.51 | Peach | | Sourness still sticks out even when very high amount of peach flavour is added. Flavour could not be harmonised. |
| 16 | 3.52 | Cardamom | 0.26 | Sourness not masked. |
| 17 | 3.52 | Bergamot | 0.63 | Sourness not masked. |

The data in Table 2 indicates that inclusion of lemon, ginger or peach flavour composition (Examples 7, 8, 10, 11, 13, 14) in an amount in the range of 0.01 to 6% is able to mask the sourness due to gallic acid when present up to 5% by weight of tea. When gallic acid is present in more than 5%, no amount of any flavour is able to mask the sourness of gallic acid (Examples 9, 12, and 15). Further, inclusion of other flavours e.g. cardamom or bergamot (Examples 16 and 17) are not suitable for masking sourness induced by gallic acid.

### Examples 18 to 21: Effect of inclusion of flavours of the invention in tannase treated tea:

Tea was treated with 10,000 units of tannase/kg dhool fresh weight during the fermentation stage of manufacture of black tea. The black tea thus produced was analysed to have 2.9% gallic acid and 3.4% theaflavins. This black tea was formulated with flavours as per the invention as shown in Table 3 and tea beverage was prepared as described for Example 1 above. The tea beverage was tasted by an expert flavourist and the comment is given in Table 3.

**Table 3**

| Example | Flavour composition | Flavour composition, wt% | Comment by flavourist |
|---|---|---|---|
| 18 | None | - | Distinct sourness perceived |
| 19 | Lemon | 2.63 | Sourness masked. Fresh lemon peel effect along with astringency of black tea perceived. |
| 20 | Peach | 0.11 | Sourness masked. Fruity peechy flavour along with astringency of black tea perceived. |
| 21 | Ginger | 1.37 | Sourness masked. Typical warm spicy flavour along with astringency of black tea perceived. |

The data in Table 3 indicates that tannase treated tea with high amounts of gallic acid and theaflavins has a distinct sour taste which is masked by inclusion of flavours as per the invention in selective amounts.

### Example 22: Panel study of tea composition of the invention as compared to tannase treated tea.

Tea as per Example-18 (tannase treated tea) and Example -19 (tannase treated tea flavoured with lemon flavour) were prepared. Tea beverage was prepared from these two compositions and tasted by a panel of 34 consumers. Each of the panel members were asked to judge the one tea beverage that they preferred from among the two compositions. The data is given in Table 4.

**Table 4**

| Example | Flavour composition | Number of consumers preferred |
|---|---|---|
| 18 | No flavour | 6 |
| 19 | Lemon flavoured | 28 |

The data in Table 4 indicates that an overwhelming number of consumers preferred the flavoured tea of the invention as against the untreated tea which has high amounts of gallic acid and theaflavins.

The invention thus provides for a black tea composition which is high in beneficial ingredients like gallic acid and optionally theaflavins, that the consumers find to be as good as black tea, if not better.

## Claims

1. A black tea composition comprising 1-5 wt% gallic acid and 0.01 to 6 wt% of a flavour composition comprising a lemon, peach or ginger flavour.

2. A composition as claimed in claim 1 wherein the flavour composition comprises 0.1 to 25% of flavour compounds by weight of the flavour composition.

3. A composition as claimed in claim 1 or 2 comprising 1.5 to 4 wt% theaflavins.

4. A composition as claimed in any one of the preceding claims wherein said black tea has been prepared by a process comprising the steps of withering, maceration, fermentation in the presence of tannase and drying.

5. A composition as claimed in any one of the preceding claims comprising 2-4 wt% gallic acid.

6. A composition as claimed in any one of the preceding claims comprising 2.5 to 6 wt% of a lemon flavoured composition.

7. A composition as claimed in any one of the preceding claims in the coldwater soluble or hot-water soluble or ready-to-drink tea format.

8. A composition as claimed in any one of claims 1 to 6 which is a black leaf tea composition.

## Patentansprüche

1. Schwarztee-Zusammensetzung, die 1 bis 5 Gew.-% Gallussäure und 0,01 bis 6 Gew.-% einer Aromazusammensetzung, die ein Zitronen-, Pfirsich- oder Ingweraroma umfasst, umfasst.

2. Zusammensetzung, wie sie in Anspruch 1 beansprucht ist, wobei die Aromazusammensetzung 0,1 bis 25 Gew.-% Aromaverbindungen, bezogen auf die Aromazusammensetzung, umfasst.

3. Zusammensetzung, wie sie in Anspruch 1 oder 2 beansprucht ist, die 1,5 bis 4 Gew.-% Theaflavine umfasst.

4. Zusammensetzung, wie sie in einem der vorangehenden Ansprüche beansprucht ist, wobei der Schwarztee durch ein Verfahren hergestellt wurde, das die Schritte Welkenlassen, Mazeration, Fermentation in Gegenwart von Tannase und Trocknung umfasst.

5. Zusammensetzung, wie sie in einem der vorangehenden Ansprüche beansprucht ist, die 2 bis 4 Gew.-% Gallussäure umfasst.

6. Zusammensetzung, wie sie in einem der vorangehenden Ansprüche beansprucht ist, die 2,5 bis 6 Gew.-% einer Zitrone-aromatisierten Zusammensetzung umfasst.

7. Zusammensetzung, wie sie in einem der vorangehenden Ansprüche beansprucht ist, in in kaltem Wasser löslicher oder in heißem Wasser löslicher oder trinkfertiger Tee-Zubereitung.

8. Zusammensetzung, wie sie einem der Ansprüche 1 bis 6 beansprucht ist, die eine schwarzer Blatttee-Zusammensetzung ist.

## Revendications

1. Composition de thé noir, contenant 1 à 5 % en poids d'acide gallique et 0,01 % à 6 % en poids d'une composition aromatique comprenant un arôme de citron, de pêche ou de gingembre.

2. Composition selon la revendication 1, dans laquelle la composition aromatique contient 0,1 % à 25 % de composés aromatiques en poids de la composition aromatique.

3. Composition selon la revendication 1 ou 2, contenant 1,5 % à 4 % en poids de théaflavines.

4. Composition selon l'une quelconque des revendications précédentes, dans laquelle ledit thé noir a été préparé par un procédé comprenant les étapes de flétrissure, de macération, de fermentation en présence de tannase et de séchage.

5. Composition selon l'une quelconque des revendications précédentes, contenant 2 % à 4 % en poids d'acide gallique.

6. Composition selon l'une quelconque des revendications précédentes, contenant 2,5 % à 6 % en poids d'une composition aromatisée au citron.

7. Composition selon l'une quelconque des revendications précédentes, au format de thé soluble dans l'eau froide ou soluble dans l'eau chaude ou prêt-à-boire.

8. Composition selon l'une quelconque des revendications 1 à 6, qui est une composition de thé noir en feuilles.
